# EUROPEAN PATENT APPLICATION

(11) **EP 1 336 670 A2**
(43) Date of publication of application: **20.08.2003**
(21) Application number: 03250707.1
(22) Date of filing: 04.02.2003
(51) Int. Cl.: C25D 11/34, C25F 3/06, H01M 8/02

(54) **Plate treatment**

(30) Priority: 13.02.2002 GB 0203324
(71) Applicant: Ineos Chlor Limited, Runcorn, Cheshire WA7 4QG (GB)
(72) Inventor: Hodgson, David Ronald, Westhoughton, Bolton BL5 2RU (GB); Farndon, Emma, Helsby, Frodsham, Cheshire WA6 0DW (GB)
(74) Representative: Collingwood, Anthony Robert

(57) **Abstract**

Metal plates to be used in electrochemical cells, e.g. fuel cells, are treated by subjecting a surface or surfaces thereof to an electrical current in the presence of an acidic electrolyte, the alloy being one containing in excess of 14% w/w nickel, e.g. in excess of 15% by weight nickel.

## Description

This invention relates to the treatment of corrosion resistant metal alloy components to be incorporated in electrochemical cells, e.g. fuel cells. Although the invention will be described in the context of components for fuel cells, it is to be understood that the invention also finds application in other types of electrochemical cells, for example electrolytic cells as used for organic synthesis of chemicals and for production of chlorine, hydrogen or oxygen.

A fuel cell is an electrochemical device in which electricity is produced without combustion of fossil fuel. In a fuel cell a fuel, which is typically hydrogen, is oxidised at a fuel electrode (anode) and oxygen, typically from air, is reduced at a cathode to produce an electric current and form byproduct water. An electrolyte is required which is in contact with both electrodes and which may be alkaline or acidic, liquid or solid. Heat and water are the only by-products of the electrochemical reaction in fuel cells wherein the fuel is hydrogen. Accordingly, the use of such cells in power generation offers potential environmental benefits compared with power generation from combustion of fossil fuels or by nuclear activity.

In proton-exchange membrane fuel cells, hereinafter referred to for convenience as "PEM" fuel cells, the electrolyte is a solid polymer membrane which allows transport of protons from the anode to the cathode and is typically based on perfluorosulphonic acid materials. The electrolyte must be maintained in a hydrated form during operation in order to prevent loss of ionic conduction through the electrolyte.

A PEM fuel cell typically comprises two electrodes, an anode and a cathode, separated by a proton-exchange membrane electrolyte. At the anode, hydrogen fuel catalytically dissociates into free electrons and protons. The free electrons are conducted in the form of usable electric current through the external circuit with which the fuel cell is in electrical contact. The protons migrate through the membrane electrolyte to the cathode where they combine with oxygen from the air and electrons from the external circuit to form water and generate heat. Individual fuel cells may be combined into assemblies which are often referred to in the art as stacks to provide the amount of power required.

Electrochemical cells, such as fuel cells, often incorporate stainless steel components where possible for reasons of economy. In a fuel cell stack for instance, separator plates between adjacent fuel cells and/or current collecting end plates may comprise stainless steel. In electrolytical cells as used for example in the generation of chlorine, electrodes or interconnecting plates of the cell may comprise stainless steel.

An important factor in securing good cell efficiency is the interfacial resistance between the surfaces of stainless steel substrates and the surfaces of other components to which the steel substrates are directly or indirectly electroconductively coupled.

While the use of metal plates in fuel cells is seen as having many advantages over other materials, there are concerns over the issue of corrosion which can lead to increased cell resistances. Makkus et al (J. Power Sources, 86 (2000) 274) for instance has reported that the anode side of the fuel cell (i.e. the hydrogen side) containing stainless steel bipolar plates, gives rise to a greater corrosion of the plate than the cathode (i.e. air) side. Makkus et al also refers to metal passivation resulting in increased resistance.

In our prior International Patent Application No. PCT/GB01/03319, there is disclosed a method of manufacturing an electrochemical cell assembly in which at least one component, e.g. a plate, which is exposed to the chemical environment during operation of the cell comprises a stainless steel, said method comprising treating a surface of the stainless steel, prior to incorporation in the assembly, with an electrical current while contacted by an electrolyte, preferably an acidic electrolyte, under conditions which reduce the interfacial resistance associated with said surface.

The present invention seeks to provide modifications and improvements in the method disclosed in said prior International Patent Application No. PCT/GB01/03319 (the entire disclosure of which is incorporated herein by this reference).

According to one aspect of the present invention there is provided a method of manufacturing an electrochemical cell assembly in which at least one component, e.g. a plate or a screen, which is exposed to the chemical environment during operation of the cell comprises a metal alloy, said method comprising treating a surface of the alloy, prior to incorporation in the assembly, with an electrical current while contacted by an electrolyte, the alloy being one containing nickel in excess of that present in 316L stainless steel (typically in excess of 14% by weight, e.g. in excess of 15%) and incorporating the treated component in the cell assembly.

The treatment is carried out under conditions which reduce the interfacial resistance associated with said surface.

The nickel may be the major component of the alloy.

The alloy may contain nickel and chromium. The nickel content may exceed the chromium content.

The alloy may be a stainless steel in which the nickel content is in excess of that of 316 or 316L stainless steel, e.g. 904, 904L or Carpenter 20 stainless steel.

The alloy may be an austenitic stainless steel.

The nickel content of the alloy may be at least 17% by weight, e.g. at least 18% by weight and may be even as much as 20% or more by weight.

The alloy may be a nickel alloy such as Inconel or Incoloy, e.g. Inconel 600 or Inconel 825, i.e. one in which nickel is the major alloying component.

Usually the chromium content of the alloy, e.g. a stainless steel or a nickel alloy, will be at least 10.5% by weight, e.g. at least 12% by weight.

The alloy may contain at least 14% chromium and at least 20% nickel, e.g at least 18% chromium and at least 24% nickel.

In some cases, the nickel content may be at least 60%.

The alloy may contain iron. Typically the alloy is one containing nickel, chromium and iron as the primary alloying components and the iron content may be higher or lower than the nickel and/or chromium content. The iron content may exceed the combined nickel and chromium content or the combined nickel and chromium content may exceed the iron content.

The treatment is typically carried out with the alloy as the anode (anodic treatment) using dc current.

A feature of the invention is that it is possible to use a relatively inexpensive metal alloy. We have surprisingly found that it is possible to reduce the interfacial resistance associated with high nickel stainless steels and nickel alloys by a process which would normally be expected to increase it. Conventional wisdom leads to an expectation that subjecting a stainless steel surface to anodic treatment would normally result in the growth of oxides on the surface and hence result in an increased interfacial resistance. We have found that the nickel content present in the alloy component can play a key role in ensuring a reduction in interfacial resistance.

In this specification, interfacial resistance is measured by the method as described hereinbelow.

The method of the invention may also include the step of selecting the viscosity of the electrolyte in conjunction with other conditions to secure a reduction in the interfacial resistance associated with said surface.

Control of viscosity may be effected by the addition of a viscosity-enhancing agent but we do not exclude the possibility of controlling the concentration of the acid component of the electrolyte, particularly when the acid component is one, such as phosphoric acid, having significant viscosity compared with for example sulphuric acid.

The viscosity enhancing agent may be organic. Typically the viscosity enhancing agent is a polyol, eg. a glycol such as polyethylene glycol, or a glycerol. The use of a viscosity enhancing agent has been found to be particularly advantageous when used in conjunction with an electrolyte containing sulphuric acid, e.g. an electrolyte in which sulphuric acid is the main or only acidic component present.

Reduction in interfacial resistance may be obtained by subjecting the alloy to an electrical potential or current of substantially constant or variable magnitude. For example, during at least major part of the treatment, the current density or applied voltage may be maintained substantially constant.

The treatment of the alloy surface may involve modification of the surface composition of the alloy and/or the surface morphology thereof.

In the case of a stainless steel for instance, the treatment may be such that the ratio of iron content to the chromium within the surface region of the stainless steel is reduced compared with the iron to chromium ratio prevailing prior to such treatment; the reduction in the iron to chromium ratio may be to such an extent that prior to treatment the chromium content at the surface of the stainless steel is less than the iron content and in which following treatment the chromium content at the surface of the stainless steel exceeds the iron content.

Prior to treatment, the surface or surfaces of the alloy may be roughened by physical techniques which are known in the art, e.g. by grit blasting.

The treatment may be applied to two or more surfaces of the alloy. The same treatment may be applied at least to each major surface of the alloy or the treatment applied to one surface of the alloy may be different from that applied to one or more other surfaces of the alloy.

The cell assembly may comprise two or more components, e.g. plates, of alloy treated as aforesaid.

The assembly may include bipolar plates, separator plates, flow field plates and/or current collecting plates or screens, at least one of which comprises alloy treated as aforesaid.

The acid(s) present in the electrolyte may be selected from one or more of the group comprising sulphuric acid, a halogenic acid such as hydrochloric acid, nitric acid, chromic acid, oxalic acid and phosphoric acid. The acid component or primary acid component of the electrolyte will usually be one which is non-halogenic. Good results have been obtained using sulphuric acid as the acid component or primary acid component of the electrolyte.

The treatment may be carried out at ambient temperature (e.g. with the electrolyte initially at substantially room temperature). Nevertheless, we do not exclude the possibility of the treatment being carried out at elevated temperatures. Usually, however, the temperature at least initially will not be greater than about 100°C, typically not greater than about 90°C and more usually not greater than about 70°C.

The electrolyte may typically have a pH of up to about 6 or less, e.g. less than 5.

The treatment may be such that the interfacial resistance of the alloy is reduced by a factor of at least 5%, preferably at least 10% and more preferably at least 15%, less than would otherwise prevail in the case of the untreated surface.

Typically said factor is at least 25%, e.g. at least 40% or even at least 50% (eg. at least 75%), less than would otherwise prevail in the case of the untreated surface.

The so treated surface of the alloy may be coated with an electrically conductive material following treatment to reduce its interfacial resistance, e.g. with a coating of titanium nitride or chromium nitride or an electrocatalytically active material.

Examples of the electrocatalytical coating treatment that may be applied are disclosed in our prior International Patent Application No. WO 00/22689, the entire contents of which are where the context admits incorporated herein by this reference. For example, the electrocatalytically-active material may be selected from the group comprising: one or more platinum group metals or oxides thereof, cerium or an oxide thereof; ruthenium or an oxide thereof; ruthenium oxide and a non-noble metal oxide; mixtures of RuO₂ with at least one of TiO₂, SnO₂, IrO₂, PtO, Sb₂ O₃, Ta₂ O₃, PdO, CeO₂, Co₃O₄.

The treatment may be carried out while the alloy is in the form of a sheet, the treated sheet subsequently being divided to form a number of plates for incorporation in one or more electrochemical cell assemblies.

Alternatively, the alloy may initially be in the form of a sheet which is then divided to form a number of plates before the treatment is applied to the individual plates.

Fluid flow channels may be formed in the sheet before such division into plates is effected. Alternatively the fluid flow channels may be formed after division has been effected.

The electrochemical cell may comprise a fuel cell, e.g. a PEM fuel cell, an alkaline fuel cell, a phosphoric acid fuel cell, a direct methanol fuel cell, a molten carbonate fuel cell or a solid oxide fuel cell.

According to another aspect of the present invention there is provided a fuel cell stack comprising: a) a plurality of fuel cell units each of which contains a proton-exchange membrane separating the cell into anolyte and catholyte chambers and provided with an anode and a cathode on opposite sides thereof; b) a separator plate, flow field plate or bipolar plate disposed between adjacent cell units; c) current-collecting means comprising a pair of plates located one at each end of the stack; d) means for feeding fuel, e.g. hydrogen or methanol, to the anolyte chambers of the stack; and e) means for feeding an oxygen-containing gas to the catholyte chambers of the stack; at least one of said plates being a metal alloy plate having a high nickel content, e.g. 904 series stainless steel or Incoloy 825 alloy, a surface of which has been treated with an electrical current while contacted by an electrolyte under conditions which reduce the interfacial resistance associated with said surface.

The invention will now be described further with reference to the following example and description.

Interfacial resistance as referred to in this specification is measured using the measurement system illustrated in, and the procedure described with reference to, Figure 1 of International Patent Application No. PCT/GB01/03319 to which reference should be made for further details.

Our prior International Patent Application No. PCT/GB01/03319 represents typical plots (see Figure 2 thereof) for untreated stainless steel plate and a treated stainless steel plate and similar plots may be obtained when, in accordance with one example of the present invention, a high nickel stainless steel plate is subjected to anodic treatment involving a current density of 25 mA.cm⁻² for 30 minutes with the plate immersed in an aqueous electrolyte of 0.5M sulphuric acid, optionally containing a viscosity enhancing agent such as PEG, initially at room temperature.

Typically alloy plates to be treated for use in an electrochemical cell in accordance with the invention are subjected to the following treatment steps. The alloy workpiece is degreased using a suitable solvent (e.g. acetone, isopropyl alcohol, trichloroethylene, caustic agents etc.) and immersed in a bath of electrolyte. The electrolyte is acid based containing one or more of the following: sulphuric acid, hydrochloric acid, nitric acid, chromic acid, oxalic acid and phosphoric acid. Using appropriate counter electrodes (e.g. platinised Ti), a dc current is passed between the workpiece (as the anode) and the counter electrodes (as the cathode). This current is calculated as a current density and may be from 0.01 mA/cm² to 500 mA/cm², preferably in the range 1 to 50 mA/cm². The current is controlled at the required level for a time between 0.5 and 180 minutes, preferably between 1 and 60 minutes and more preferably between 2 and 7 minutes. At the start of the anodic treatment, the electrolyte is at room temperature (and may increase during the course of the treatment). The particular conditions necessary to secure a reduction in interfacial resistance while maintaining the corrosion resistance properties of the alloy substantially unchanged or enhancing the same may be determined experimentally.

The workpiece is removed and rinsed in deionised water or deionised water made slightly alkaline to remove excess acid, and dried, e.g. in air or by passing a warm air current over the workpiece. The workpiece is then installed as a bipolar plate, separator plate, flow field plate and/or a current collecting plate or screen in the electrochemical cell, e.g. a fuel cell.

Optimised conditions appropriate for anodic treatment of the alloy in order to reduce interfacial resistance may be established for a given electrolyte and temperature by configuring the sample of the alloy to be treated as the anode in a bath of electrolyte, establishing a potential difference between the anode and a counter electrode (as cathode) so as to pass a dc current of substantially constant current density through the electrolyte between the anode and electrode and using a range of current densities and treatment times. From measurements of the interfacial resistance, the corrosion potential Ecorr and corrosion current Icorr, a suitable operating regime can be determined. In practice, a suitable current density can be established by conducting experiments to determine current densities at which the interfacial resistance (as measured using the technique described above) is significantly reduced. Typically current densities of 20 mA.cm⁻² and upwards are used. For efficient energy usage, it is of course desirable to carry out the treatment at as low a current density as can be achieved while securing a significant reduction in interfacial resistance.

For a given electrolyte and temperature, a suitable treatment time may be established by reference to graphical representations similar to those illustrated in Figure 3 of our prior International Patent Application No. PCT/GB01/03319.

Experimental work was carried out in an electrochemical cell using 0.5M sulphuric acid as the electrolyte with 5 x 5 cm anodes of a 904 stainless steel a nd Carpenter 20 stainless steel at a current density of 25 mA cm⁻² for 6 min. Contact resistance measurements were made using the method specified in International Patent Application No. PCT/GB01/03319. The method for determining corrosion potentials and currents was the same as that specified in International Patent Application No. PCT/GB01/03319 except that a potential scan rate of 1mV s⁻¹ was used.

The 904 stainless steel, more specifically 904L, employed has the general composition: 0.02 max C, 2.0 max Mn, 0.045 max P, 0.035 max S, 1.00 max Si, 23.0 - 28.0 Ni, 19.0 - 23.0 Cr, 4.00 - 5.00 Mo, 1.00 - 2.00 Cu and balance Fe. The 904 samples used were from a batch having the nominal analysis 25 Ni, 20 Cr, 4.5 Mo, 1.7 Mn, 1.5 Cu, 0.35 Si, 0.02 max C, balance Fe (w/w basis). The Carpenter 20 stainless steel samples had the analysis 32 - 38 Ni, 19.0 - 21.0 (e.g.20) Cr, 3.0 - 4.0 (e.g..3.5) Cu, 2.0 - 3.0 (e.g. 2.5) Mo, 1 max Si, 2.0 max (e.g. 0.8) Mn, 0.035 max S, 0.045 max P, 0.07 max C, balance Fe (w/w basis).

The contact resistance, corrosion potential (Ecorr) and corrosion current (Icorr) of the 904 stainless, after degreasing but prior to anodic treatment, was determined to be 27.5 mΩ cm² @ 200 N cm⁻², -133 mV vs SCE and 2.14 x 10⁻⁶ cm⁻² respectively. After treatment, the contact resistance, corrosion potential (Ecorr) and corrosion current (Icorr) of the 904 stainless was determined to be 12.3 mΩ cm² @ 200 N cm⁻², +56 mV vs SCE and 3.47 x 10⁻⁷ A cm⁻² revealing significant improvement in interfacial resistance and corrosion properties.

In the case of Carpenter 20 stainless steel, the interfacial or contact resistance before and after treatment was determined to be respectively 12.4 and 4.3 mΩ cm² @ 200 N cm⁻².

As previously mentioned, the use of metal bipolar plates in fuel cells is seen as having many advantages over other materials, for instance: thin plates leading to low volume stacks; ease of pressing a flow field into the plate; and low cost metals and alloys are readily available in large quantities. One concern over the use of metals plates however is the issue of corrosion which can result in metal ions from the metal plates blocking active sites in the membrane in a PEM type fuel cell leading to increased cell resistances. Makkus et al (J. Power Sources, 86 (2000) 274) reported that the anode side of the fuel cell (i.e. the hydrogen side) containing metal bipolar plates, gives rise to a greater corrosion of the plate than the cathode (i.e. air ) side. Makkus et al also refers to passivation resulting in increased resistance.

The anodic treatment of the stainless steel in accordance with the present invention may involve enrichment of the surface layer of the stainless steel in such a way that the iron to chromium content in the surface region of the treated steel (as measured using X ray photoelectron spectroscopy) is reduced in the manner described with reference to Figure 4 of our prior International Patent Application No. PCT/GB01/03319 to which reference should be made for further details.

In a typical production process, a number of sheets or a coil of high nickel content stainless steel, e.g. 904 or Carpenter 20 stainless steel, are processed. Each sheet has sets of features introduced into one or both major surfaces (e.g. by etching or pressing) in such a way that each set of the features serve as flow distribution channels for fluids in an electrochemical cell assembly such as a fuel cell stack. The fluids may be (but are not limited to) hydrogen, air, oxygen, water and/or methanol. An example of such a flow pattern is shown in Figure 7 of prior International Patent Application No. PCT/GB01/03319. Once the sheet has been treated in accordance with the invention, it can be cut into smaller pieces each forming a plate provided with a set of fluid flow channels on one or each major face, each plate being dimensioned and configured for use in the fuel cell. In accordance with the invention, the stainless steel sheet is treated in such a way as to enhance the surface conductivity, preferably without reducing the corrosion resistance and, in some cases, increasing the corrosion resistance of the metal.

The treatment process usually comprises the following steps:
1. The sheet to be treated is first 'cleaned' using a degreasing solvent such as acetone, iso-propanol, trichloroethylene, or an alkaline based aqueous system.
2. The sheet is introduced into an aqueous treatment bath containing sulphuric acid, e.g. 0.5 mol dm⁻³, and optionally a viscosity enhancing agent such as a glycol (e.g. PEG) at room temperature or other desired temperature. The treatment bath is equipped with counter electrodes made of suitable material (e.g. titanium coated with iridium dioxide or platinum or stainless steel) which may be in sheet or mesh form and the sheet to be treated is located between the two counter electrodes.
3. Electrical connections are made with both the stainless steel sheet workpiece and to the counter electrodes and a substantially constant dc current is passed between the counter electrodes and the workpiece. The current density is usually between 1 and 100 mA cm⁻² and is applied for a suitable time (usually between 1 minute to 2 hours), the current density and the time of application being determined experimentally in the light of treating samples of the stainless steel in the manner described previously.
4. After the current has been applied for the required time, the workpiece is disconnected from the electrical circuitry, removed from the bath and excess acid removed for example by suspending the workpiece over the bath for a time to allow excess acid to drain from the surface into the bath.
5. The treated sheet is then transported to a rinse bath containing deionised water, or deionised water made slightly alkaline with sodium carbonate or sodium hydroxide and after rinsing the sheet is dried in a clean environment. Drying may be performed by natural evaporation or by circulation of air at room or elevated temperature.
6.The dried sheet is cut into smaller plates compatible in size with the dimensions and configuration of the fuel stack into which the plates are to be incorporated as flow field plates and/or bipolar plates for instance.

In an alternative method, instead of dividing the stainless steel sheet into the individual plates after the treatment process, after being formed with the sets of fluid flow channel features, the stainless steel sheet may instead initially be separated (e.g. by cutting or etching) into plates of suitable dimensions and configuration for incorporation in the electrochemical cell. The individual plates so formed can then be individually treated in accordance with steps 1 to 5 above.

In another variation, the opposite faces of the stainless steel sheet or individual plates may be subjected to the treatment to differing extents. For example, each face may be treated with regard to the conditions to which it will be exposed in operation of the electrochemical cell. For example, in the case of a bipolar plate for a fuel cell, one face might be exposed to a fluid comprising hydrogen or methanol (the anode side) and the opposite face may be exposed to a fluid comprising oxygen (the cathode side). By treating the two faces differently, e.g. for different lengths of time, each face may be optimised according to the conditions that it will be exposed to in operation of the fuel cell. Thus, the above process may be modified at step 4 by terminating current flow between one face and the associated counter electrode after a first predetermined time interval appropriate for that face (e.g. the hydrogen or anode side). At that point, that side is disconnected and isolated whilst current flow between the opposite face and its associated counter electrode is continued until lapse of a second predetermined time interval.

Although the invention is described above in relation to stainless steel alloys with high nickel contents, improved interfacial resistances have been obtained using other alloys with high nickel contents. This is exemplified by 825, 600 and 020 nickel alloys which have the following compositions (weight per cent):
Incoloy 825
   0.05 max carbon; 0.5 max silicon; 38 - 46 nickel; 1.5 - 3.0 copper; 1 max manganese; 0.03 max sulphur; 19.5 - 23.5 chromium; 2.5 - 3.5 molybdenum; 0.6 - 1.2 titanium; 0.2 max aluminium; and 22 min iron.
Inconel 600
   0.15 max carbon; 0.5 max silicon; 72 min nickel; 0.5 max copper; 1 max manganese; 0.015 max sulphur; 14 - 17 chromium; 6 - 10 iron.
Incoloy 020
   32.0 - 38.0 nickel; 19.0 - 21.0 chromium; 3.0 - 4.0 copper; 2.0 - 3.0 molybdenum; carbon 0.07 max; niobium + tantalum 8 x C - 1.0; 2.0 max manganese; 0.045 max phosphorous; 0.035 max sulphur; 1.0 max silicon; balance iron.

5 x 5 cm samples of these nickel alloys were subjected to the same experimental conditions as described above in relation to 904 stainless steel. Prior to treatment, the interfacial resistances (at 200 N/cm²) were 88, 8.6 and 36.3 mΩ cm²for 825, 600 and 020 respectively. After treatment under the prescribed conditions as stated for 904 stainless steel, the interfacial resistances were found to be 10.2, 4.8 and 10.8 mΩ cm² for 825, 600 and 020 respectively.

It will be appreciated that the procedures described above for the production of treated stainless steel plates for incorporation into an electrochemical cell apply also to nickel-containing alloys such as Incoloy 825, Incoloy 020 and Inconel 600.

One application in which alloy plates treated in accordance with the present invention may be used is described in Figure 7 of prior International Patent Application No. PCT/GB01/03319, the disclosure of which is incorporated herein by this reference.

Experimental work was also carried out involving the deposition of ruthenium on to plates previously treated in the manner described above. The procedure used was as follows:
A sample of the alloy was degreased using acetone and immersed in an electroplating solution containing 0.15 % (w/v) ruthenium nitrosyl nitrate in 1 M nitric acid. The electroplating cell was set up with the alloy sample as the cathode and the counter electrode (platinised titanium) as the anode. Current was then passed at a current density of 10 mA.cm⁻², this current was applied for 15 minutes. At the commencement of plating, the solution was at room temperature (however the temperature may tend to increase during the course of the process). After plating, the alloy sample was removed from the bath and rinsed in deionised water and dried. The interfacial resistance was measured in the manner described above.

Using 825 and 020 alloys from the same batch as referred to above, it was found that the interfacial resistance of the sample was further reduced, from 10.2 to 8.0 mΩ cm² in the case of 825 and from 10.8 to 8.9 mΩ cm² in the case of 020.

Likewise, using 904 stainless steel (but from a different batch to that for which results are given above), the interfacial resistance measurements for the sample prior to any current treatment, after anodising treatment and subsequently after plating with ruthenium were 88, 10.2 and 8.0 mΩ cm² respectively.

## Claims

1. A method of manufacturing an electrochemical cell assembly in which at least one component which is exposed to the chemical environment during operation of the cell comprises a metal alloy, said method comprising treating a surface of the alloy, prior to incorporation in the assembly, with an electrical current while contacted by an electrolyte, the alloy being one containing nickel in excess of that present in 316L stainless steel and incorporating the treated component in the cell assembly.

2. A method as claimed in Claim 1 in which the alloy contains nickel and chromium.

3. A method as claimed in Claim 2 in which the nickel content exceeds the chromium content.

4. A method as claimed in any one of Claims 1 to 3 in which the alloy contains iron, e.g. a nickel-iron-chromium alloy.

5. A method as claimed in Claim 4 when dependent on Claim 2 in which the iron content exceeds the combined nickel and chromium content.

6. A method as claimed in Claim 4 when dependent on Claim 2 in which the combined nickel and chromium content exceeds the iron content.

7. A method as claimed in any one of the preceding claims in which nickel is present in an amount in excess of 14% by weight, for example in excess of 15% by weight.

8. A method as claimed in Claim 7 in which nickel is present in an amount of at least 17% by weight, e.g. at least 18% by weight..

9. A method as claimed in Claim 7 in which nickel is present in an amount of at least 20% by weight.

10. A method as claimed in any one of Claims 1 to 4 in which nickel is the major component of the alloy.

11. A method as claimed in Claim 4 when dependent on Claim 2 in which the treatment is effective to reduce the ratio of iron to chromium content within the surface region of the alloy compared with the iron to chromium ratio prevailing prior to such treatment.

12. A method as claimed in any one of the preceding claims in which the current density to which the stainless steel surface is subjected during at least a major part of said treatment is substantially constant.

13. A method as claimed in any one of Claims 1 to 12 in which the alloy is a stainless steel.

14. A method as claimed in Claim 1 in which the alloy comprises 904, 904L or Carpenter 20 stainless steel.

15. A method as claimed in Claim 1 in which the alloy comprises Incoloy 825 or 020 nickel alloy.

16. A method as claimed in Claim 1 in which the alloy comprises Inconel 600 nickel alloy.

17. A method as claimed in any one of the preceding claims in which the electrolyte includes at least one acid selected from the group comprising sulphuric acid, a halogenic acid, nitric acid, chromic acid, oxalic acid and phosphoric acid.

18. A method as claimed in any one of Claims 1 to 17 in which the electrolyte includes sulphuric acid as the only or the main acidic component .

19. A method as claimed in any one of the preceding claims in which the interfacial resistance of the alloy is reduced by a factor of at least 5% compared with the interfacial resistance prevailing prior to said treatment.

20. A method as claimed in Claim 19 in which the interfacial resistance of the alloy is reduced by a factor of at least 15% compared with the interfacial resistance prevailing prior to said treatment.

21. A method as claimed in Claim 19 in which the interfacial resistance of the alloy is reduced by a factor of at least 25% compared with the interfacial resistance prevailing prior to said treatment.

22. A method as claimed in Claim 19 in which the interfacial resistance of the alloy is reduced by a factor of at least 40%, eg. at least 50%, compared with the interfacial resistance prevailing prior to said treatment.

23. A method as claimed in any one of the preceding claims in which the treated surface of the alloy is coated with an electrically conductivity enhancing material following said treatment and prior to incorporation in the electrochemical cell assembly.

24. A method as claimed in any one of Claims 1 to 23 in which the treated surface of the alloy is coated with titanium nitride, chromium nitride or an electrocatalytically active material such as ruthenium or ruthenium oxide.

25. A method as claimed in any one of the preceding claims in which two or more surfaces of the alloy are so treated.

26. A method as claimed in Claim 25 in which the same treatment is applied at least to each major surface of the alloy.

27. A method as claimed in Claim 25 in which the treatment applied to one surface of the alloy is different from that applied to one or more other surfaces of the alloy component.

28. A method as claimed in any one of the preceding claims in which the cell assembly comprises two or more components comprising alloy treated as aforesaid.

29. A method as claimed in any one of the preceding claims, the assembly comprising bipolar plates, separator plates, flow field plates and/or current collecting plates, at least one of which comprises a plate of said alloy treated as aforesaid.

30. A method as claimed in any one of the preceding claims in which the treatment is carried out using a current density in the range from about 1 to about 100 mA.cm⁻².

31. A method as claimed in any one of the preceding claims in which the treatment is carried out using a current density of at least about 20 mA.cm⁻².

32. A method as claimed in any one of the preceding claims in which the treatment is carried out using a current density of up to about 50 mA.cm⁻².

33. A method as claimed in any one of the preceding claims in which the treatment is carried out for a time interval of between 0.5 and 180 minutes.

34. A method as claimed in any one of the preceding claims in which the treatment is carried out for a time interval of up to about 60 minutes.

35. A method as claimed in any one of the preceding claims in which the treatment is carried out for a time interval of at least about 1 minute.

36. A method as claimed in any one of the preceding claims in which the treatment is carried out for a time interval of between about 3 and about 7 minutes.

37. A method as claimed in any one of the preceding claims in which the treatment is carried out while the alloy is in the form of a sheet and in which the treated sheet is subsequently divided to form a number of plates for incorporation in one or more electrochemical cell assemblies.

38. A method as claimed in any one of Claims 1 to 37 in which the alloy is initially in the form of a sheet and in which the sheet is divided to form a number of plates before the treatment is applied to the individual plates.

39. A method as claimed in Claim 37 or 38 in which fluid flow channels are formed in the sheet before such division into plates is effected.

40. An electrochemical cell assembly manufactured by the method of any one of Claims 1 to 39.

41. A fuel cell assembly manufactured by the method of any one of Claims 1 to 39.

42. A fuel cell assembly as claimed in Claim 41, being a PEM fuel cell, an alkaline fuel cell, a phosphoric acid fuel cell, a direct methanol fuel cell, a molten carbonate fuel cell or a solid oxide fuel cell.

43. An electrochemical cell including bipolar plates, separator plates, flow field plates and/or current collecting plates or screens, at least one of which comprises anodically treated alloy containing in excess of 14% nickel and having reduced interfacial resistance.

44. A fuel cell component formed with fluid flow channels, the component comprising an alloy containing in excess of 14% w/w nickel and which, prior to incorporation in the fuel cell, has been treated with an electrical current while in contact with an electrolyte to reduce the interfacial resistance associated with the surface.

45. A fuel cell stack comprising:
a) a plurality of fuel cell units each of which contains a proton-exchange membrane separating the cell into anolyte and catholyte chambers and provided with an anode and a cathode on opposite sides thereof;
b) a separator plate, flow field plate or bipolar plate disposed between adjacent cell units;
c) current-collecting means comprising a pair of plates or screens;
d) means for feeding fuel to the anolyte chambers of the stack; and
e) means for feeding an oxygen-containing gas to the catholyte chambers of the stack;
at least one of said plates being an alloy containing in excess of 14% by weight, e.g. in excess of 15% by weight, nickel with at least one surface which has been treated with an electrical current while contacted by an electrolyte under conditions which reduce the interfacial resistance associated with said surface.
